# EUROPÄISCHE PATENTSCHRIFT

(11) **EP 2 191 264 B1**
(45) Veröffentlichungstag und Bekanntmachung des Hinweises auf die Patenterteilung: **19.12.2012**
(21) Anmeldenummer: 09745811.1
(22) Anmeldetag: 14.05.2009
(51) Int. Cl.: G01N 33/10, G01N 21/85, G01N 1/20, G01N 15/02, G01N 15/14, B02C 25/00, B02C 4/28, B02C 4/32

(54) **SYSTEM UND VERFAHREN ZUR MAHLGUT-CHARAKTERISIERUNG IN EINER MAHLANLAGE**
SYSTEM AND METHOD FOR GROUND MATERIAL CHARACTERIZATION IN A GRINDING SYSTEM
SYSTÈME ET PROCÉDÉ POUR CARACTÉRISER UNE MATIÈRE BROYÉE DANS UNE INSTALLATION DE BROYAGE

(30) Priorität: 14.05.2008 DE 102008001749
(43) Veröffentlichungstag der Anmeldung: 02.06.2010
(73) Patentinhaber: Bühler AG, 9240 Uzwil (CH)
(72) Erfinder: PIERRI, Dario, CH-9000 St. Gallen (CH); HEINE, Martin, CH-8472 Seuzach (CH); DÜBENDORFER, Urs, CH-9244 Niederuzwil (CH)
(74) Vertreter: Hepp Wenger Ryffel AG
(86) Internationale Anmeldenummer: PCT/EP2009/055877
(87) Internationale Veröffentlichungsnummer: WO 2009/138479

(56) Entgegenhaltungen:
- WO-A1-02/44692
- WO-A1-2006/000112
- WO-A1-2006/116882
- DE-A1- 4 339 285
- US-A1- 2002 170 367

## Beschreibung

Die Erfindung bezieht sich auf ein System und ein Verfahren zur Mahlgut-Charakterisierung in einer Mahlanlage, insbesondere zur Charakterisierung von Partikeln in einem Mahlgutstrom aus Getreide-Mahlprodukten in einer Getreide-Mahlanlage.

Im Allgemeinen durchläuft der Mahlgutstrom zunächst eine Reinigungsstufe, in der Fremdkörper, Verunreinigungen und qualitativ schlechtes Mahlgut wie beispielsweise Bruchkorn oder infiziertes Korn durch mechanische, aerodynamische und/oder optische Trenn- bzw. Sortierprozesse von dem zu reinigenden Mahlgut entfernt werden. Hierbei muss ein Kompromiss zwischen der Reinheit und der Ausbeute des gereinigten Mahlguts gefunden werden. Die Siebe und Siebparameter, Luftströmungen und/oder optische Trennkriterien werden so eingestellt, dass bei der Reinigung möglichst wenig "gutes" Mahlgut entfernt wird und dennoch eine ausreichende Qualität des gereinigten Mahlguts erzielt wird. Es ist daher wünschenswert, dass eingehende Mahlgut, das gereinigte Mahlgut und/oder das in der Reinigung entfernten Mahlgut zu charakterisieren. Befindet sich zuviel gutes Mahlgut im entfernten Mahlgutstrom oder ist die Mahlgutqualität über der Spezifikation, wird die Trennintensität verringert, entsprechend umgekehrt ist das Vorgehen bei zu geringer Mahlgutqualität nach der Reinigung. Aus der Charakterisierung des eingehenden Mahlguts kann dessen Qualität beurteilt werden und eine Prognose erstellt werden, um gute Trennschnitte auszuwählen.

Beim Vermahlen körnigen Materials, wie z.B. Weizen, in einer Zerkleinerungsmaschine, z.B. einem Walzenstuhl, wird das körnige, Material zwischen den Walzen eines Walzenpaars zerkleinert. Um Mehl einer bestimmten Feinheit und stofflichen Zusammensetzung zu gewinnen, muss das Mahlgut in der Regel mehrmals durch eine derartige Passage geleitet werden, wobei zwischendurch Agglomerate durch Prallauflösung aufgebrochen sowie Klassierungen durch Windsichten und Sieben durchgeführt werden. So lassen sich Mehle mit verschiedenen Feinheiten bzw. verschiedenem Mahlgrad gewinnen.

Die Mahlwirkung einer Passage hängt vorwiegend vom Spaltabstand zwischen den beiden Walzen eines Walzenpaares, der Drehzahl und dem Drehzahlverhältnis der Walzen ab. Es gibt aber auch andere Walzenstuhl-Betriebsparameter oder Walzenstuhleigenschaften wie beispielsweise die Geometrie und Abnutzung der Walzenoberfläche, welche die Mahlwirkung einer Passage beeinflussen. Es ist daher wünschenswert, eine Charakterisierung des Mahlgutes zu erhalten, das nach einer bestimmten Passage austritt. Wenn dabei eine Abweichung des Mahlguts von einer Mahlgut-Sollcharakteristik auftritt, kann ausgehend von dieser Abweichung eine Korrektur des Spaltabstands, des Drehzahlverhältnisses oder ggf. weiterer Walzenstuhl-Betriebsparameter durchgeführt werden, um die Abweichung möglichst schnell wieder auszugleichen. Zusätzlich kann auch der Wartungsbedarf einer Walzenstuhlkomponente erkannt werden, wenn beispielsweise die Sollcharakteristik aufgrund einer zu stark abgenutzen Walze nicht mehr sinnvoll erreicht werden kann.

Die W02006/116882A1 beschreibt ein System und ein Verfahren zur Charakterisierung eines Partikelstroms, wobei die Form, die Abmessung oder das Bewegungsverhalten der einzelnen Partikel erfasst werden. Insbesondere wird dort Bildinformation von dem Mahlgutstrom gewonnen, wodurch die Partikelgrössen-Verteilung des Mahlgutstroms bestimmt wird. Diese Partikelgrössen-Verteilung kann dann zur Steuerung oder Regelung eines Walzenstuhls verwendet werden.

Aus der US 2002/0170367 ist ein System bekannt, mit dem Eigenschaften, insbesondere Farbeigenschaften, eines partikelförmigen Produktstromes bestimmt werden können. Zu diesem Zweck werden die Partikel beleuchtet und das Licht mit Hilfe einer CCD-Kamera detektiert.

Die WO 02/44692 offenbart eine Vorrichtung zum Analysieren der Eigenschaften von gemahlenen Produkten. Auch mit dieser Vorrichtung können Farbeigenschaften der Produkte bestimmt werden.

In der DE 43 39 285 werden Verfahren und Vorrichtungen zum Reinigen und Sortieren von Schüttgut beschrieben. Die Vorrichtungen können eine Farbkamera enthalten, mit denen Farbeigenschaften gemessen werden können. Anhand dieser Farbeigenschaften kann eine Sortierung nach der Farbe erfolgen.

Die WO 2006/000112 befasst sich mit Systemen zur Mahlgut-Charakterisierung, insbesondere von gemahlenem Getreide. Auch dieses Dokument offenbart eine Kamera zur Erfassung elektromagnetischer Strahlung.

Die US 4,421,772 offenbart ebenfalls Vorrichtungen und Verfahren, mit denen Mahlgut mit einer Lichtquelle beleuchtet werden kann und das Licht mit Hilfe einer Erfassungseinheit erfasst werden kann.

Der Erfindung liegt die Aufgabe zugrunde, ein System und ein Verfahren bereitzustellen, das eine noch weitreichendere und aussagekräftigere Charakterisierung eines Mahlgutstroms in einer Mahlanlage ermöglicht, wobei insbesondere eine aussagekräftige Charakterisierung von Partikeln in einem Mahlgutstrom aus Getreide-Ganzkorn, Getreide-Mahlzwischenprodukten und Geteideendprodukten in einer Getreide-Mahlanlage ermöglicht werden soll.

Diese Aufgabe wird durch das System und das Verfahren gemäss den unabhängigen Patentansprüchen gelöst.

Das erfindungsgemässe System zur Mahlgut-Charakterisierung in einer Mahlanlage besitzt (1.) einen Bestrahlungsabschnitt zum Hindurchführen mindestens eines Teils des Mahlgutstroms und mit einem Bestrahlungsmittel zum Bestrahlen der Partikel in dem mindestens einen Teil des Mahlgutstroms mit elektromagnetischer Strahlung; und (2.) einen Erfassungsabschnitt zum Hindurchführen des mindestens einen Teils des Mahlgutstroms und mit einem Erfassungsmittel zum Erfassen elektromagnetischer Strahlung, die von Partikeln des durch den Bestrahtungsabschnitt hindurchgeförderten Teils des Mahlgutstroms abgestrahlt wird.

Der Erfassungsabschnitt und der Bestrahlungsabschnitt sind entlang der Richtung des Mahlgutstroms an derselben Stelle angeordnet. Dies ermöglicht eine kompakte Bauweise der erfindungsgemässen Vorrichtung. Das System umfasst ferner eine Beleuchtungseinheit, mit der die Partikel mit Auflicht bestrahlbar sind. Zudem umfasst das System eine Bestrahlungseinheit, mit der die Partikel mit Durchlicht bestrahlbar sind. Das Erfassungsmittel enthält ein Abbildungssystem.

Erfindungsgemäss enthält das Erfassungsmittel einen Farbbildsensor, um die Partikel mittels der von ihnen reflektierten oder abgestrahlten elektromagnetischen Strahlung auf den Farbbildsensor abzubilden, wobei der Farbbildsensor Sensor-Bildelemente zur spektral selektiven Erfassung der auf die Sensor-Bildelemente abgebildeten elektromagnetischen Strahlung aufweist. Weiterhin sind die Partikel mit einer Kombination aus Durchlicht und Auflicht bestrahlbar.

Dies ermöglicht die Verwendung von "Farbinformation" für die Charakterisierung der Partikel des Mahlgutstroms, indem die Partikel mittels der von ihnen abgestrahlten elektromagnetischen Strahlung auf einen Farbbildsensor abgebildet werden, der die elektromagnetische Strahlung dann auf seinen Sensor-Bildelementen spektral selektiv erfasst. Unter "Farbinformation" soll dabei im Rahmen der vorliegenden Erfindung nicht nur Farbe im engeren Sinne, sondern auch Spektralinformation jenseits des sichtbaren Spektrums, insbesondere im UV-Bereich und im IR-Bereich verstanden werden.

Die Charakterisierung mittels Partikelgrössen-Verteilung kann so mittels einer weiteren Dimension der Charakterisierung anhand von Farbinformation präzisiert werden. Dies ist besonders vorteilhaft bei der Beurteilung des Mahlergebnisses von Getreide, da die aus verschiedenen Bereichen eines Getreidekorns stammenden Bruchstücke unterschiedliche Farben haben bzw. auf die Einstrahlung bestimmter elektromagnetischer Strahlung (IR, sichtbares Licht, UV) ein unterschiedliches Abstrahlverhalten haben. So sind z.B. aus dem Endosperm stammende Getreidekorn-Bruchstücke bzw. Mahlprodukte heller und eher weiss bis gelb, Teile des Keimlings des Getreidekorns eher gelb bis grün und die aus dem Schalenbereich stammenden Getreidekorn-Bruchstücke dunkel und eher bräunlich.

Durch eine Kombination von Auflicht und Durchlicht können im Vergleich zur reinen Auflichtbeleuchtung schärfere Konturen, aber im Gegensatz zur reinen Durchlichtbeleuchtung dennoch Farbinformationen detektiert werden.

Beim Mahlen von Weizen will man z.B. oft verhindern, dass das gesamte Weizenkorn wahllos zu kleinen Partikeln zerkleinert wird, die nur aus Endosperm, nur aus n Schalenteilen bestehen oder Endosperm/Schalenteil-Mischpartikel sind. Vielmehr ist man bestrebt, ein selektives Zerkleinern des Weizenkoms oder eines anderen Getreidekoms zu erzielen, so dass die reinen Endosperm-Partikel vorwiegend bzw. im Durchschnitt eher klein sind und angenähert eine "Kugel" oder "Klötzchenform" haben und die Schalenteile vorwiegend bzw. im Durchschnitt eher gross sind und angenähert eine "Plättchenform" haben. Eine solche selektive Zerkleinerung erleichtert das Fraktionieren des Mahlgutes in einem anschliessenden Fraktionierschritt, wodurch der gesamte Mahlprozess effizienter gestaltet werden kann, d.h. Zerkleinern und anschliessend einfacheres Sortieren/Fraktionieren nicht nur nach Grösse, sondern auch nach Form der Getreide-Bruchstücke. Dies ermöglicht nicht nur die Herstellung unterschiedlicher Endprodukte wie Kleie, Griess, Mehl oder Keimlinge, sondern auch Variationen bei der Endproduktzusammenstetzung, beispielsweise bezüglich Faser-, Mineralstoff-, Protein und/oder Fettgehalt.

Durch das erfindungsgemässe Verwenden von Partikelgrössen-Information und Partikel-Farbinformation kann die Selektivität des Zerkleinerungs- und oder Trennvorgangs besser beurteilt werden als bei der lediglichen Verwendung von Partikelgrössen-Information.

Für das schon erwähnte Beispiel des Zerkleinems von Weizen bedeutet dies, dass bei hoher Selektivität des Zerkleinerungsvorgangs praktisch nur reine Endosperm-Partikel und Schalenteile mit nur wenig anhaftendem Endosperm vorliegen, während bei geringer Selektivität viele Endosperm/Schalenteile-Mischpartikel und nur wenige reine Endosperm-Partikel und wenige Schalenteile mit nur wenig anhaftendem Endosperm vorliegen.

Anhand der vorliegenden Erfindung wird für die Weizen-Zerkleinerung hohe Selektivität attestiert, wenn im Partikelgrössen-Spektrum die kleinen Partikel hell bzw. weiss bis gelb sind (Endosperm-Fraktion) und die grossen Partikel dunkel bzw. grau bis bräunlich sind (Schalenteile).

Mittels Farbinformation kann mit Bildverarbeitung auf die quantitative Zusammensetzung der Partikel geschlossen werden. Diese Farbinformation kann mit der Partikelgrössen-Information verknüpft werden, wodurch Partikelgrössen-Verteilung reiner Schalenteile (dunkel bzw. grau bis bräunlich), Partikelgrössen-Verteilung von Mischteilen mit bestimmten Anteilen von Bestandteilen sowie Partikelgrössen-Verteilung reiner Endospermteile erhalten werden können. Diese verknüpfte Information stellt eine Verbindung von Farbinformation und Partikelgrössen-Information dar und kann zur Steuerung und/oder Regelung des Prozesses genutzt werden. Steigt beispielsweise der Anteil der Mischteile oder sinkt die Grösse der Schalenteilchen, so könnten die Spaltweite der Vermahlung, eine geänderte Feuchte des Getreides oder eine abgenutzte Oberfläche der Walzen Ursache sein. Durch Auswertung von in der Vergangenheit gespeicherten Messdaten und deren Auswertung bezüglich des Zusammenspiels von Partikelfarbinformation und Partikelgrösse kann die Fehlerursache stark eingegrenzt werden. Es ist auch möglich, weitere Partikeleigenschaften wie z.B. Partikelflächeninhalt, Partikelkontureigenschaften, Partikelformfaktoren und Partikelgeschwindigkeiten mit der Farbinformation zu verknüpfen, um detaillierte Aussagen über das Produkt und den Betriebszustand einer Maschine oder Anlage zu machen. Der Farbbildsensor lässt sich auch in Kombination mit anderen Messverfahren wie der NIR, MIR oder IR-Messung, der UV-Messung, induktiven und/oder kapazitiven Messverfahren einzusetzten.

Vorzugsweise ist förderaufseitig von dem Bestrahlungsabschnitt ein Desagglomerationsabschnitt zum Desagglomerieren von Mahlgut-Agglomeraten in dem Mahlgutstrom vorgesehen. Dadurch wird verhindert, dass Agglomerate aus mehreren Mahlgut-Partikeln fälschlicherweise als grosse Mahlgut-Partikel erfasst und identifiziert werden. Vorzugsweise werden die Partikel in dem Deagglomerationsabschnitt in einer Luftströmung beschleunigt und durch die dabei entstehenden strömungsmechanischen Scherkräfte vereinzelt. Idealerweise werden Getreidemahlzwischen- und Endprodukte dem Erfassungsabschnitt mit Geschwindigkeiten > 10 m/s und Getreideganzkömer mit 1-10 m/s zugeführt.

Vorzugsweise besitzt der Erfassungsabschnitt zwei gegenüberliegende Wände, zwischen denen ein Spalt gebildet ist, durch den der mindestens eine Teil des Mahlgutstroms hindurchführbar ist, wobei die beiden gegenüberliegenden Wände vorzugsweise parallel zueinander angeordnete ebene Flächen sind. Vorzugsweise ist das Erfassungsmittel in den Spalt gerichtet.

Zweckmässigerweise sind die gegenüberliegenden Wände des Erfassungsabschnitts für von dem Farbbildsensor erfassbare elektromagnetische Strahlung durchlässig. Somit kann der Farbbildsensor wahlweise auf jeder Seite des Spaltes hinter einer der Wände angeordnet werden. Zusätzlich kann bei Anbringung einer Bestrahlungseinheit auf beiden Spaltweiten des Erfassungsabschnitts eine Kombination von Auflicht- und Durchlichtbeleuchtung erreicht werden, um die Vorteile beider Beleuchtungsmethode zu kombinieren. Hierbei wird mit vorzugsweise telezentrischer Bestrahlung des Mahlguts im Durchlicht die Kontur des Schattens auch kleiner Mahlgut-Partikel genau auf dem Farbbildsensor abgebildet, während mit schräg einfallendem Auflicht unter einem Winkel von vorzugsweise mindestens 45° zur Senkrechten die zugehörige Partikel-Farbinformation detektiert wird.

Vorzugsweise ist von den beiden gegenüberliegenden Wänden des Erfassungsabschnitts die erste Wand für von dem Farbbildsensor erfassbare elektromagnetische Strahlung durchlässig, während die zweite Wand für von dem Farbbildsensor erfassbare elektromagnetische Strahlung undurchlässig und stärker absorbierend als die Mahlgutpartikel ist. Bei dieser Anordnung ist der Farbbildsensor auf der einen Seite des Spaltes spaltabseitig an der durchlässigen Wand angeordnet, und eine Quelle für elektromagnetische Strahlung, insbesondere eine Lichtquelle, für die von dem Farbbildsensor erfassbare elektromagnetische Strahlung ist auf derselben Seite des Spaltes spaltabseitig an der durchlässigen Wand angeordnet. Dadurch lässt sich das durch den Spalt hindurch geförderte Mahlgut der Mahlgutprobe bestrahlen, und das Streulicht bzw. die Reflexion der Partikel der Mahlgutprobe gelangt in das Sichtfeld des Farbbildsensors. Vorzugsweise wird bei dieser Anordnung ein telezentrisches Objektiv mit telezentrischer Auflichtbeleuchtung verwendet, um Mahlgut-Partikel im gesamten Tiefenschärfebereich massstabsgetreu erfassen zu können.

Zweckmässigerweise ist das Erfassungsmittel auf der einen Seite des Spaltes spaltabseitig an der durchlässigen Wand angeordnet, und das Bestrahlungsmittel ist auf derselben Seite des Spaltes spaltabseitig an der durchlässigen Wand angeordnet ist, so dass die durch den Spalt hindurch geförderten Partikel des Mahlgutstroms bestrahlt werden.

Vorzugsweise hat die spaltseitige Oberfläche der zweiten Wand eine stärkere Absorption der von dem Bestrahlungsmittel emittierten elektromagnetischen Strahlung als die Oberflächen der Partikel des Mahlgutstroms. Dadurch wird gewährleistet, dass zwischen den reflektierenden Mahlgut-Partikeln, die sich vor der spaltseitigen Oberfläche bewegen, und der von der Wand reflektierten Strahlung ausreichend viel Kontrast besteht, so dass eine mühelose Erfassung der abgebildeten Mahlgut-Partikel erfolgen kann und die anschliessende Bildverarbeitung wesentlich erleichtert wird. Dies erspart aufwändige und zeitraubende Filter-Prozesse bei der Bildverarbeitung.

Den beiden gegenüberliegenden Wänden kann jeweils eine Reinigungsvorrichtung zugeordnet sein, mit der die beiden gegenüberliegenden Wände von an ihnen haftenden Mahlgut-Partikeln befreit werden können. Bei der Reinigungsvorrichtung kann es sich um eine Vibrationsquelle, insbesondere eine Ultraschallquelle handeln, die mit den beiden gegenüberliegenden Wänden jeweils starr verbunden ist, um die beiden Wände in Vibration versetzen zu können. Dies sorgt dafür, dass nicht zu viele ruhende, d.h. an der einen oder der anderen Wand haftende Mahlgut-Partikel auf den Farbbildsensor abgebildet werden. Die Partikel-Grössenverteilung der an den Wänden haftenden Mahlgut-Partikel ist in der Regel eine andere als die der im Mahlgutstrom mitgeführten Mahlgut-Partikel. Wenn man bei der Erfassung und Verarbeitung der Mahlgutstrom-Bildinformation auf eine Unterscheidung zwischen ruhenden und bewegten Mahlgut-Partikeln verzichten möchte, sollte daher eine solche Wandreinigung regelmässig durchgeführt werden, um die an den Wänden haftenden Partikel "abzuschütteln". Als Reinigungsvorrichtung kommt eine Vibrationsquelle, insbesondere eine Ultraschallquelle in Frage, mit der das gasförmige Medium zwischen den beiden gegenüberliegenden Wänden in Vibration versetzt werden kann.

Vorzugsweise sind der Bestrahlungsabschnitt und der Erfassungsabschnitt stromab von einer Zerkleinerungseinheit und/oder stromab von einer Fraktioniereinheit der Mahlanlage angeordnet, wobei die Zerkleinerungseinheit insbesondere ein Walzenstuhl ist. Vorzugsweise ist in diesem Fall ein erster Bestrahlungs- und Erfassungsabschnitt im Bereich des ersten axialen Endes des Walzenstuhls sowie ein zweiter Bestrahlungs- und Erfassungsabschnitt im Bereich des zweiten axialen Endes des Walzenstuhls angeordnet. Dadurch lässt sich Information über den Mahlgrad als Funktion der axialen Position entlang des Walzenpaares gewinnen. Im Falle nicht-symmetrischer Mahlgut-Charakteristiken entlang des Walzenpaares oder insbesondere zwischen dem linken und dem rechten Endbereich der Walzenpassage kann man Rückschlüsse auf eine Fehlausrichtung der Walzen des Walzenpaares treffen und korrigierend eingreifen. Vorzugsweise besitzt das System ein Bildverarbeitungssystem zum Verarbeiten von aus dem Farbbildsensor stammenden Bildern. Dieses Bildverarbeitungssystem weist vorzugsweise Mittel auf um bei den durch den Farbbildsensor im Reflexionsmodus und Durchlichtmodus abgebildeten und erfassten Mahlgut-Partikeln zwischen bewegten Mahlgut-Partikeln und an den Wänden haftenden Mahlgut-Partikeln zu unterscheiden. Hierzu kann beispielsweise durch zweimaliges Erfassen eines Partikels in einem oder in zwei aufeinanderfolgenden Bildern deren Geschwindigkeit ermittelt werden. Alternativ können auch durch Analyse mindestens der letzten zwei Bilder ruhende Partikel erkannt werden. Dann können die an der Wand haftenden, ruhenden Mahlgut-Partikel in der Auswertung bei der Bildverarbeitung unberücksichtigt bleiben, so dass nur die bewegten Mahlgut-Partikel für die Auswertung verwendet werden. Dadurch wird eine Verfälschung der Partikel-Grössenverteilung des Mahlgutes vermieden.

Vorzugsweise erfolgt vor und/oder während des Hindurchförderns des mindestens einen Teils des Mahlgutstroms durch den Erfassungsabschnitt ein Desagglomerieren von Mahlgut-Agglomeraten in dem Mahlgutstrom. Vorzugsweise erfolgt während und/oder nach dem Hindurchfördern des mindestens einen Teils des Mahlgutstroms durch den Erfassungsabschnitt ein Verarbeiten der auf den Farbbildsensor abgebildeten Bilder. Das Bestrahlen der Partikel, das Erfassen der von den Partikeln abgestrahlten Strahlung und das Verarbeiten der auf den Farbbildsensor abgebildeten Bilder kann kontinuierlich erfolgen, wobei insbesondere das Bestrahlen der Partikel stroboskopartig durch eine Serie von Lichtblitzen erfolgen kann.

Um die kontinuierliche Verarbeitung der auf den Farbbildsensor abgebildeten Bilder zu ermöglichen, verfügt das System idealerweise über eine insbesondere integrierte Recheneinheit, wie beispielsweise einen DSP (digitaler Signalprozessor) und/oder FPGA (field programmable gate array), um auch höhere Bildraten von vorzugsweise > 15 Bilder pro Sekunde verarbeiten zu können. Die Recheneinheit reduziert die vom Farbbildsensor erfasste Datenmenge und klassiert diese bezüglich den gemessenen Partikeleigenschaften wie beispielsweise Partikelfarbanteile, Partikelgrösse, Partikelkontur, Partikelform und/oder Partikelgeschwindigkeit in Histogrammen, die die statistisch relevanten Informationen wiedergeben. Diese Informationen werden dann vorzugsweise über Messzeiten von einer Sekunde bis fünf Minuten akkumuliert und dann an eine Einrichtung zur Prozessüberwachung, Steuerung oder Regelung bzw. an einen Datenspeicher übermittelt.

Die auf den Farbbildsensor abgebildeten Bilder des mindestens einen Teils des Mahlgutstroms können zur Regelung der Mahlanlage verwendet werden, und zwar insbesondere zur Regelung einer Zerkleinerungseinheit und/oder einer Fraktioniereinheit der Mahlanlage.

Die Erfindung ermöglicht es, zusätzlich zu Partikelgrösse, Partikelform und evtl. weiteren Eigenschaften wie Partikelgeschwindigkeit die Farbunterschiede der verschiedenartigen, aus den Hauptkomponenten des Getreidekoms bestehenden Partikel zu unterscheiden. Dadurch ist es möglich, für die farblich unterschiedlichen Hauptkomponenten des Getreidekorns (Endosperm, Schale, Keimling) die jeweilige farbspezifische Partikelgrössen-Verteilung zu bestimmen. Dadurch erhält man einen aussagekräftigen Einblick in das Zerkleinerungs- und Fraktionierergebnis eines Zerkleinerungs- bzw. Fraktionierschritts in einem Mahlverfahren, so dass man den Mahlprozess online optimieren und den optimalen Betriebszustand für jeweils unterschiedliche Rohmaterialien und Umgebungsbedingungen einstellen kann.

Durch den Einsatz von zwei oder mehreren Erfassungsmitteln pro Bestrahlungsabschnitt kann die Zeit zum Erlangen einer ausreichend genauen Partikelgrössenstatistik erheblich verkürzt werden. Die Erfassungsmittel haben dabei vorzugsweise unterschiedlich grosse Bildausschnitte. Dabei kann ein Bestrahlungsmittel für ein oder mehrere Erfassungsmittel genutzt werden.

Die Erfindung wird nachfolgend anhand von schematischen Figuren erläutert, ohne dass der Gegenstand der Erfindung auf die darin gezeigten Ausführungsformen zu beschränken ist.
- Fig. 1:: Getreidekom und Fremdkörper; schematisch
- Fig. 2:: Mahlprodukte; schematisch
- Fig. 3:: Erfindungsgemässes System; schematisch

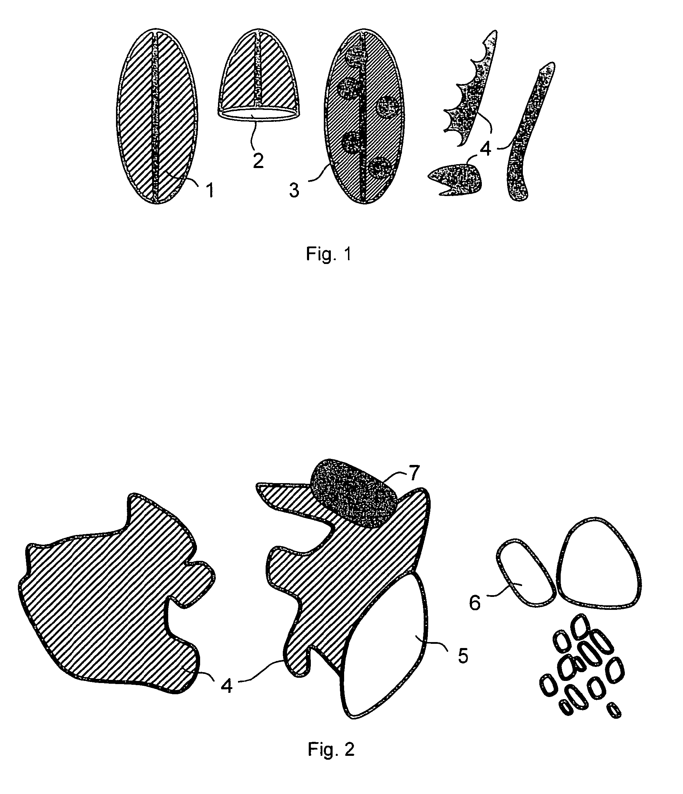

Fig. 1 zeigt ein Getreide-Ganzkorn 1, sowie ein Getreidebruchkorn 2, ein infiziertes Getreidekorn 3 und Fremdkörper 4. Schalenteile des Getreidekoms sind eher dunkel (grau bis bräunlich), wohingegen das Endosperm eher hell (weiss bis gelblich) ist, was an der Bruchkante des Getreidebruchkorns 2 angedeutet ist. Infizierungen des Koms sind eher dunkel.
Fig. 2 zeigt schematisch die typischen Zerkleinerungsprodukte, die beim Mahlen eines Getreidekoms erhalten werden: Ein reines Schalenteil 4, sowie Schalenteile mit noch anhaftendem Endosperm und ggf. noch dem Keimling 7. Bevorzugtes Mahlprodukt sind reine kugelförmige oder klötzchenförmige Endospermteilchen 6.

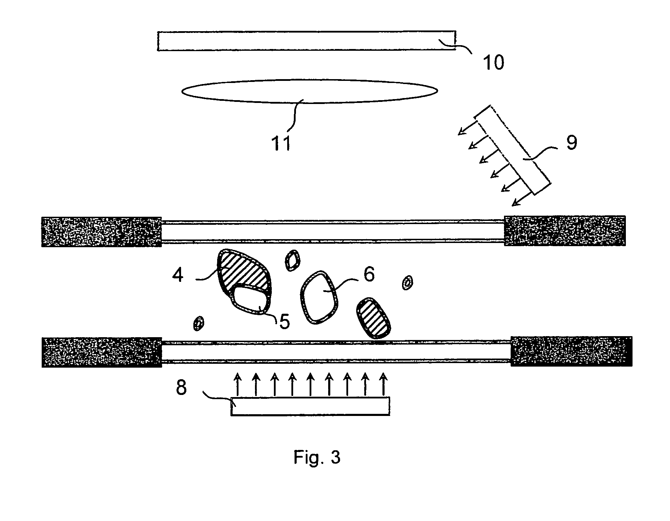

Fig. 3 zeigt schematisch eine Ausführungsform des erfindungsgemässen Systems zur Charakterisierung von Partikeln in einem Mahlgutstrom aus Getreide-Mahlprodukten in einer Getreide-Mahlanlage. In diesem Ausführungsbeispiel sind Bestrahlungsabschnitt und Erfassungabschnitt auf gleicher Höhe des Spalts angeordnet, durch den der Mahlgutstroms hindurchgeleitet wird. Die verschiedenen Mahlprodukte (4,5;6) passieren einen Spalt und werden über eine Bestrahlungseinheit 8 mit elektromagnetischer Strahlung (hier Durchlicht) bestrahlt. Die derart bestrahlten Mahlprodukte (4,5;6) strahlen ihrerseits wiederum elektromagnetische Strahlung ab, die über eine Linse oder ein Linsensystem 11 auf einen Farbbildsensor 10 geleitet und von diesem erfasst wird. Verwendet wird eine Kombination von Durchlicht (erzeugt mittels der Bestrahlungseinheit 8) und Auflicht, welches in einem spitzen Winkel zum Mahlgutstrom ausgerichtet ist; dies ist durch die Beleuchtungseinheit 9 illustriert.

## Patentansprüche

1. System zur Mahlgut-Charakterisierung in einer Mahlanlage, insbesondere zur Charakterisierung von Partikeln (1; 2; 3; 4; 5; 6; 7) in einem Mahlgutstrom aus Getreide-Mahlprodukten in einer Getreide-Mahlanlage, wobei das System aufweist:
- einen Bestrahlungsabschnitt zum Hindurchführen mindestens eines Teils des Mahlgutstroms, wobei der Bestrahlungsabschnitt wenigstens ein Bestrahlungsmittel (8,9) aufweist zum Bestrahlen von Partikeln (1; 2; 3; 4; 5; 6; 7) in dem mindestens einen Teil des Mahlgutstroms mit elektromagnetischer Strahlung; und
- einen Erfassungsabschnitt zum Hindurchführen des mindestens einen Teils des Mahlgutstroms, wobei der Erfassungsabschnitt wenigstens ein Erfassungsmittel (10,11) aufweist zum Erfassen elektromagnetischer Strahlung, die von Partikeln (1;2;3;4;5;6;7) des durch den Bestrahlungsabschnitt hindurchgeförderten Teils des Mahlgutstroms abgestrahlt wird;
wobei
- der Erfassungsabschnitt und der Bestrahlungsabschnitt entlang der Richtung des Mahlgutstroms an derselbsen Stelle angeordnet sind,
- das System eine Beleuchtungseinheit (9) umfasst, mit der die Partikel (1;2;3;4;5;6;7) mit Auflicht bestrahlbar sind,
- das System eine Bestrahlungseinheit (8) umfasst, mit der die Partikel (1;2;3;4;5;6;7) mit Durchlicht bestrahlbar sind, und
- das Erfassungsmittel ein Abbildungssystem (11) aufweist,
**dadurch gekennzeichnet, dass**
- das Erfassungsmittel einen Farbbildsensor (10) aufweist, wobei das Abbildungssystem (11) und der Farbbildsensor (10) derart ausgebildet sind, dass die Partikel (1;2;3;4;5;6;7) mittels der von ihnen abgestrahlten elektromagnetischen Strahlung auf den Farbbildsensor (10) abbildbar sind, wobei der Farbbildsensor (10) Sensor-Bildelemente zur spektral selektiven Erfassung der auf die Sensor-Bildelemente abgebildeten elektromagnetischen Strahlung aufweist, und
- die Partikel (1;2;3;4;5;6;7) mit einer Kombination aus Durchlicht und Auflicht bestrahlbar sind.

2. System nach Anspruch 1, **dadurch gekennzeichnet, dass** der Erfassungsabschnitt zwei gegenüberliegende Wände aufweist, zwischen denen ein Spalt gebildet ist, durch den der mindestens eine Teil des Mahlgutstroms hindurchführbar ist.

3. System nach Anspruch 2, **dadurch gekennzeichnet, dass** das Erfassungsmittel in den Spalt gerichtet ist.

4. System nach Anspruch 2 oder 3, **dadurch gekennzeichnet, dass** die gegenüberliegenden Wände des Erfassungsabschnitts für von dem Farbbildsensor (10) erfassbare elektromagnetische Strahlung durchlässig sind.

5. System nach einem der Ansprüche 2 bis 4, **dadurch gekennzeichnet, dass** von den beiden gegenüberliegenden Wänden des Erfassungsabschnitts die erste Wand für von dem Farbbildsensor (10) erfassbare elektromagnetische Strahlung durchlässig ist und die zweite Wand für von dem Farbbildsensor (10) erfassbare elektromagnetische Strahlung undurchlässig und stärker absorbierend als die Mahlgutpartikel (1;2;3;4;5;6;7) ist.

6. System nach Anspruch 5, **dadurch gekennzeichnet, dass** das Erfassungsmittel auf der einen Seite des Spaltes spaltabseitig an der durchlässigen Wand angeordnet ist und das Bestrahlungsmittel auf derselben Seite des Spaltes spaltabseitig an der durchlässigen Wand angeordnet ist, so dass die durch den Spalt hindurch geförderten Partikel (1;2;3;4;5;6;7) des Mahlgutstroms bestrahlt werden.

7. System nach Anspruch 5 oder 6, **dadurch gekennzeichnet, dass** die spaltseitige Oberfläche der zweiten Wand eine stärkere Absorption der von dem Bestrahlungsmittel emittierten elektromagnetischen Strahlung aufweist als die Oberflächen der Partikel (1;2;3;4;5;6;7) des Mahlgutstroms.

8. System nach einem der Ansprüche 1 bis 7, **dadurch gekennzeichnet, dass** der Bestrahlungsabschnitt und der Erfassungsabschnitt stromab von einer Zerkleinerungseinheit und/oder stromab von einer Fraktioniereinheit und/oder stromab von einer Reinigungseinheit der Mahlanlage angeordnet sind.

9. System nach Anspruch 8, **dadurch gekennzeichnet, dass** die Zerkleinerungseinheit ein Walzenstuhl ist.

10. System nach Anspruch 9, **dadurch gekennzeichnet, dass** ein erster Bestrahlungs- und Erfassungsabschnitt im Bereich des ersten axialen Endes des Walzenstuhls sowie ein zweiter Bestrahlungs- und Erfassungsabschnitt im Bereich des zweiten axialen Endes des Walzenstuhls angeordnet ist.

11. System nach einem der Ansprüche 1 bis 10, **dadurch gekennzeichnet, dass** es eine insbesondere integrierte Recheneinheit umfasst, mit welcher die Bildinformationen fortlaufend auszuwertbar sind und die gewonnenen Einzelpartikelinformaitonen oder Statistiken insbesondere in definierten Zeitabständen an eine Prozess- oder Maschienenüberwachung, -steuerung, -regelung und/oder einen Datenspeicher übermittelbar sind.

12. System nach einem der Ansprüche 1 bis 11, **dadurch gekennzeichnet, dass** der der Erfassungsabschnitt wenigstens ein Leuchtmittel oder eine Kombination von Leuchtmitteln (8,9) umfasst, das/die derart ausgebildet und angeordnet ist/sind, dass die Mahlgut-Partikel (1;2;3;4;5;6;7) mit insbesondere telezentrischem Auflicht erfassbar sind.

13. Verfahren zur Mahlgut-Charakterisierung in einer Mahlanlage, insbesondere zur Charakterisierung von Partikeln (1;2;3;4;5;6;7) in einem Mahlgutstrom aus Getreide-Mahlprodukten in einer Getreide-Mahlanlage, wobei das Verfahren folgende Schritte aufweist:
- Hindurchführen mindestens eines Teils des Mahlgutstroms durch einen Bestrahlungsabschnitt und Bestrahlen der Partikel (1;2;3;4;5;6;7) in dem mindestens einen Teil des Mahlgutstroms mit elektromagnetischer Strahlung; und
- Hindurchführen des mindestens einen Teils des Mahlgutstroms durch einen Erfassungsabschnitt, der entlang der Richtung des Mahlgutstroms an derselbsen Stelle angeordnet ist wie der Bestrahlungsabschnitt, und Erfassen elektromagnetischer Strahlung, die von Partikeln (1;2;3;4;5;6;7) des durch den Bestrahlungsabschnitt hindurchgeförderten Teils des Mahlgutstroms abgestrahlt oder reflektiert wird;
**dadurch gekennzeichnet, dass** die Partikel (1;2;3;4;5;6;7) mit einer Kombination aus Durchlicht und Auflicht erfasst und mittels der von ihnen abgestrahlten elektromagnetischen Strahlung auf einen Farbbildsensor (10) abgebildet werden, der die elektromagnetische Strahlung auf seinen Sensor-Bildelementen spektral selektiv erfasst.

14. Verfahren nach Anspruch 13, **dadurch gekennzeichnet, dass** die auf den Farbbildsensor (10) abgebildeten Bilder des mindestens einen Teils des Mahlgutstroms zur Steuerung oder Regelung der Mahlanlage verwendet werden.

15. Verfahren nach Anspruch 14, **dadurch gekennzeichnet, dass** die auf den Farbbildsensor (10) abgebildeten Bilder des mindestens einen Teils des Mahlgutstroms zur Regelung einer Zerkleinerungseinheit und/oder einer Fraktioniereinheit der Mahlanlage verwendet werden.

## Claims

1. A system for grist characterization in a grinding facility, in particular for characterizing particles (1, 2, 3, 4, 5, 6, 7) in a stream of grist stream made up of grain grinding products in a grain-grinding facility, in which the system exhibits:
- an irradiation section for passing through at least one part of the grist stream, whereby the irradiation section (8,9) exhibits at least one means of irradiation for irradiating particles (1, 2, 3, 4, 5, 6, 7) in the at least one part of the grist stream with electromagnetic radiation; and
- a detection section for passing through the at least one part of the grist stream, whereby the detection section exhibits at least one means of detection (10, 11) for detecting electromagnetic radiation, which is emitted by particles (1, 2, 3, 4, 5, 6, 7) of the part of the grist stream supplied through the irradiation section;
whereby
- the detection section and the irradiation section are disposed in the direction of the stream of grist at the same place,
- the system includes an illumination unit (9), with which the particles (1, 2, 3, 4, 5, 6, 7) can be irradiated,
- the system includes an irradiation unit (8), with which the particles (1, 2, 3, 4, 5, 6, 7) can be irradiated with transmitted light, and
- the means of detection exhibits an imaging system (11),
**characterized in that**
- the means of detection exhibits a color-image sensor (10), in which the imaging system (11) and the coolor-image sensor (10) are designed such that the particles (1, 2, 3, 4, 5, 6, 7) can be imaged by means of the electromagnetic radiation emitted by them to the color-image sensor (10), in which the color-image sensor (10) exhibits sensor-image elements for spectrally selective detection of the electromagnetic radiation emitted to the sensor-image elements, and
- the particles (1, 2, 3, 4, 5, 6, 7) can be irradiated with a combination of transmitted and direct light.

2. The system according to claim 1, **characterized in that** the detection section exhibits two opposite-lying walls, between which a gap is formed, through which the at least one part of the stream of grist can pass through.

3. The system according to claim 2, **characterized in that** the means of detection is directed into the gap.

4. The system according to claim 2 or 3, **characterized in that** the opposite-lying walls of the detection section are permeable to electromagnetic radiation detectable by the color-image sensor (10).

5. The system according to one of claims 2 through 4, **characterized in that** the first wall of the two opposite-lying walls of the detection section is permeable to electromagnetic radiation detectable by the color-image sensor (10) and the second wall is impermeable to electromagnetic radiation detectable by the color-image sensor (10) and is more intensely absorbent that the grist particles (1, 2, 3, 4, 5, 6, 7).

6. The system according to claim 5, **characterized in that** the means of detection is disposed on the one side away from the gap on the permeable wall and the means of irradiation is disposed on the same side away from the gap on the permeable wall, so that the particles (1, 2, 3, 4, 5, 6, 7) of the stream of grist that are supplied through the gap are irradiated.

7. The system according to claims 5 or 6, **characterized in that** the gap-side surfaces of the second wall exhibit a more intense absorption of the electromagnetic radiation emitted by the means of irradiation than the surfaces of the particles (1, 2, 3, 4, 5, 6, 7) of the grist stream.

8. The system according to one of claims 1 through 7, **characterized in that** the irradiation section and the detection section are disposed downstream of a crushing unit and/or downstream of a fractionation unit and/or downstream of a cleaning unit of the grinding facility.

9. The system according to claim 8, **characterized in that** the crushing unit is a roller mill.

10. The system according to claim 9, **characterized in that** a first irradiation and detection section is disposed in the area of the first axial end of the roller mill and a second irradiation and detection section is disposed in the area of the second axial end of the roller mill.

11. The system according to one of claims 1 through 10, **characterized in that** it includes an especially integrated computation unit, with which the image information can be continuously evaluated and the individual particle information or statistics obtained, particularly in defined time intervals, can be transmitted in process or machine monitoring, control, or regulation, and/or data storage.

12. The system according to one of claims 1 through 11, **characterized in that** the detection section includes at least one means of lighting or a combination of means of lighting (8, 9), which are designed and disposed such that the grist particles (1, 2, 3, 4, 5, 6, 7) can be detected in particular with direct telecentric light.

13. A method for grist characterization in a grinding facility, particularly for characterizing particles (1, 2, 3, 4, 5, 6, 7) in a stream of grist made up of grain grinding products in a grain- grinding facility, in which the method exhibits the following steps:
- passing at least one part of a stream of grist through an irradiation section and irradiating the particles (1, 2, 3, 4, 5, 6, 7) in the at least one part of the grist stream with electromagnetic radiation; and
- passing the at least one part of the grist stream through a detection section, which is disposed in the direction of the grist stream on the same side as the irradiation section, and detecting electromagnetic radiation that is emitted or reflected by the particles (1, 2, 3, 4, 5, 6, 7) of the part of the stream of grist supplied through the irradiation section;
**characterized in that** the particles (1; 2; 3; 4; 5; 6; 7) are detected with a combination of transmitted and direct light and are imaged by means of electromagnetic radiation emitted by them to a color-image sensor (10), which detects the electromagnetic radiation at its spectrally selective sensor0image elements.

14. The method according to claim 13, **characterized in that** the images of the at least one part of the stream of grist imaged at the color-image sensor (10) are used to control or regulate the grinding facility

15. The method according to claim 14, **characterized in that** the images of the at least one part of the grist stream imaged at the color-image sensor (10) are used to regulate a crushing unit and/or a fractionation unit of the grinding facility.

## Revendications

1. Système de caractérisation de mouture dans une usine de broyage, en particulier pour la caractérisation des particules (1, 2, 3, 4, 5, 6, 7) dans un flux de flux de mouture composé de produits de broyage de grains dans une usine de broyage de grain dans lequel le système comprend :
- une section d'irradiation pour le passage à travers au moins une partie du flux de mouture, par laquelle la section d'irradiation (8,9) contient au moins un moyen d'irradiation pour l'irradiation des particules (1, 2, 3, 4, 5, 6, 7) dans au moins une partie du flux de mouture avec un rayonnement électromagnétique ; et
- une section de détection pour le passage à travers au moins une partie du flux de mouture, par laquelle la section de détection comporte au moins un moyen de détection (10, 11) pour détecter le rayonnement électromagnétique, qui est émis par les particules (1, 2, 3, 4, 5, 6, 7) de la partie du flux de mouture fournie par la section d'irradiation;
par laquelle
- la section de détection et la section d'irradiation sont agencées dans une direction du flux de mouture au même endroit,
- le système comprend une unité d'éclairage (9), avec laquelle les particules (1, 2, 3, 4, 5, 6, 7) peuvent être irradiées,
- le système comprend une unité d'irradiation (8), avec laquelle les particules (1, 2, 3, 4, 5, 6, 7) peuvent être irradiées avec de la lumière transmise, et
- le moyen de détection contient un système d'imagerie (11),
**caractérisé en ce que**
- le moyen de détection contient un capteur d'imagerie en couleur (10), dans lequel le système d'imagerie (11) et le capteur d'imagerie en couleur (10) sont conçus de telle sorte que les particules (1, 2, 3, 4, 5, 6, 7) peuvent être imagées par le rayonnement électromagnétique qui est émis par elles vers le capteur d'imagerie en couleur (10), dans lequel le capteur d'imagerie en couleur (10) contient des éléments de capteur d'image pour la détection spectralement sélective du rayonnement électromagnétique émis par les éléments de capteur d'image, et
- les particules (1, 2, 3, 4, 5, 6, 7) peuvent être irradiées avec une combinaison de lumière transmise et directe.

2. Système selon la revendication 1, **caractérisé en ce que** la section de détection comporte des parois opposées, entre lesquelles est formé un espace, à travers lequel au moins une partie du flux de mouture peut passer.

3. Système selon la revendication 2, **caractérisé en ce que** le moyen de détection est dirigé vers l'espace.

4. Système selon la revendication 2 ou la revendication 3, **caractérisé en ce que** les parois opposées de la section de détection sont perméables au rayonnement électromagnétique détectable par le capteur d'imagerie en couleur (10).

5. Système selon l'une des revendications 2 à 4, **caractérisé en ce que** la première paroi des deux parois opposées de la section de détection est perméable au rayonnement électromagnétique détectable par le capteur d'imagerie en couleur (10) et la deuxième paroi est imperméable au rayonnement électromagnétique détectable par le capteur d'imagerie en couleur (10) et il est plus intensément absorbant que les particules de la mouture (1, 2, 3, 4, 5, 6, 7).

6. Système selon la revendication 5, **caractérisé en ce que** le moyen de détection est disposé sur le côté éloigné de l'espace sur la paroi perméable et le moyen d'irradiation est disposée sur le même côté éloigné de l'espace sur la paroi perméable, de sorte que les particules (1, 2, 3, 4, 5, 6, 7) du flux de mouture qui sont fournies à travers l'espace sont irradiées.

7. Système selon les revendication 5 ou 6, **caractérisé en ce que** les surfaces côté espace de la deuxième paroi possèdent une absorption plus intense du rayonnement électromagnétique émis par le moyen d'irradiation que les surfaces des particules (1, 2, 3, 4, 5, 6, 7) du flux de mouture.

8. Système selon l'une des revendications 1 à 7, **caractérisé en ce que** la section d'irradiation et la section de détection sont agencées en aval d'une unité de broyage et/ou en aval d'une unité de fractionnement et/ou en aval d'une unité de nettoyage de l'usine de broyage.

9. Système selon la revendication 8, **caractérisé en ce que** l'unité de broyage est un moulin à cylindre.

10. Système selon la revendication 9, **caractérisé en ce qu'**une première section d'irradiation et de détection est disposée dans la zone de la première extrémité axiale du moulin à cylindre et une deuxième section d'irradiation et de détection est disposée dans la zone de la deuxième extrémité axiale du moulin à cylindre.

11. Système selon l'une des revendications 1 à 10, **caractérisé en ce qu'**il comprend une unité de calcul spécialement intégrée, grâce à laquelle les informations d'image peuvent être continuellement évaluées et des informations individuelles ou des statistiques sur les particules obtenues, particulièrement dans des intervalles de temps définis, qui peuvent être transmis à la surveillance de la machine ou au procédé, au contrôle ou la régulation et/ou le stockage des données.

12. Système selon l'une des revendications 1 à 11, **caractérisé en ce que** la section de détection comprend au moins un moyen d'éclairage ou une combinaison de moyens d'éclairage (8, 9), qui sont conçus et agencés de sorte que les particules de mouture (1, 2, 3, 4, 5, 6, 7) puissent être détectées en particulier avec une lumière télécentrique directe.

13. Système de caractérisation de mouture dans une usine de broyage, en particulier pour la caractérisation des particules (1, 2, 3, 4, 5, 6, 7) dans un flux de mouture composé de produits de broyage de grains dans une usine de broyage de grain, dans lequel le système comprend les étapes suivantes :
- le passage d'au moins une partie d'un flux de mouture à travers une section d'irradiation et l'irradiation des particules (1, 2, 3, 4, 5, 6, 7) dans au moins une partie du flux de mouture avec le rayonnement électromagnétique ; et
- le passage d'au moins une partie d'un flux de mouture à travers une section de détection, qui est agencée dans la direction du flux de mouture du même côté que la section d'irradiation, et la détection du rayonnement électromagnétique qui est émis ou réfléchi par les particules (1, 2, 3, 4, 5, 6, 7) de la partie du flux de mouture fournie à travers la section d'irradiation;
**caractérisé en ce que** les particules (1;2;3;4;5;6;7) sont détectées avec une combinaison de lumière transmise et directe et sont visualisées par le moyen de rayonnement électromagnétique émis par les particules vers un capteur d'imagerie en couleur (10), qui détecte le rayonnement électromagnétique au niveau de ses éléments de capteur d'imagerie spectralement sélectifs.

14. Système selon la revendication 13, **caractérisé en ce que** les images au moins d'une partie du flux de mouture visualisées au niveau du capteur d'imagerie en couleur (10) sont utilisées pour contrôler ou réguler l'usine de broyage.

15. Système selon la revendication 14, **caractérisé en ce que** les images au moins d'une partie du flux de mouture visualisées au niveau du capteur d'imagerie en couleur (10) sont utilisées pour réguler une unité de broyage et/ou une unité de fractionnement de l'usine de broyage.
